# EUROPEAN PATENT APPLICATION

(11) **EP 2 923 829 A1**
(43) Date of publication of application: **30.09.2015**
(21) Application number: 14162484.1
(22) Date of filing: 28.03.2014
(51) Int. Cl.: B32B 5/18, B32B 5/32, B32B 25/20, A42B 3/12

(54) **Composite material, production and use thereof**

(71) Applicant: Impact Protection Technology AG, 8001 Zürich (CH)
(72) Inventor: Zografou, Jason, 52064 Aachen (DE); Bünger, Daniel, 52072 Aachen (DE)
(74) Representative: Eisenführ Speiser

(57) **Abstract**

The present invention relates to a Composite material comprising or consisting of: an optional layer (a) comprising or consisting of a material comprising or consisting of a foamed or un-foamed, thermoplastic or thermosetting, polymer having a hardness in the range of Shore A 75 to Durometer D 85, a layer (b) comprising or consisting of a material comprising or consisting of an elastic or visco-elastic foam having a density in the range of 25 kg/m³ to 800 kg/m³, a layer (c) comprising or consisting of a material comprising or consisting of an elastic or visco-elastic foam having a density in the range of 25 kg/m³ to 720 kg/m³, a layer (d) comprising or consisting of a material comprising or consisting of a silicone rubber or a silicone gel having a hardness below Shore A 8, respectively. The present invention further relates to a method for producing said composite material comprising one or more of the following steps: injection molding, reaction injection molding, casting, bonding and overmolding. The present invention also relates to a composite material produced by or producible by said method, to an article comprising or consisting said composite material, and to the use of said composite material for absorbing impact technology.

## Description

### Field of the invention

The present invention relates to a Composite material comprising or consisting of: an optional layer (a) comprising or consisting of a material comprising or consisting of a foamed or un-foamed, thermoplastic or thermosetting, polymer having a hardness in the range of Shore A 75 to Durometer D 85, a layer (b) comprising or consisting of a material comprising or consisting of an elastic or visco-elastic foam having a density in the range of 25 kg/m³ to 800 kg/m³, a layer (c) comprising or consisting of a material comprising or consisting of an elastic or visco-elastic foam having a density in the range of 25 kg/m³ to 720 kg/m³, a layer (d) comprising or consisting of a material comprising or consisting of a silicone rubber or a silicone gel having a hardness below Shore A 8, respectively. The present invention further relates to a method for producing said composite material comprising one or more of the following steps: injection molding, reaction injection molding, casting, bonding and overmolding. The present invention also relates to a composite material produced by or producible by said method, to an article comprising or consisting said composite material, and to the use of said composite material for absorbing impact technology.

### Description of the Prior Art

Helmets can protect vehicle riders from severe injuries during traffic accidents. Traffic injuries have only quite recently been recognized as a major public health problem in developing countries. Also, serious bicycle accidents have increased in the last two decades. Traffic injuries often involve severe cases and require critical care that eventually causes high medical costs and economic losses. Such burdens would be prolonged if the victims consequently sustain disabilities. In order to reduce deaths and traumas of traffic accident, the helmet act for mo-torcyclists and bicyclists was enacted in many countries. Some countries even enforced the helmet use to be nationwide.

The main helmet components are the foam liner and the shell. Basically, the function of the foam is to absorb most of the impact energy, while the function of the shell is to resist penetration of any foreign object from touching the head and resulting in direct skull damage, and to distribute the impact load on a wider foam area thus increasing the foam linear energy absorption capacity.

Usually manufacturers design their helmets based on experimental verification. During the experimental verification, the helmet must absorb the energy of the impact such that the headform acceleration shall exceed certain predetermined values (300 g). The shell must resist penetration of a falling 60 ° conical anvil with specific dimension. The criterion is that the spike does not touch the headform on the helmeted-headform test setup. This penetration test is the main criteria for shell thickness determination and, in fact, resulting in a helmet with a thicker shell and consequently a weight of about 6-8 times as compared to the foam liner.

Different countries have their own standards for helmet tests. All of the standards require helmets to pass lab tests where they are placed on an instrumented head form, turned upside down and dropped for a measured distance onto flat or hemispherical anvils. Drop distances vary but are generally between one and two meters. For the helmet to pass, the instruments inside the head form must register less than 300 g during the impact, or in some cases less than 250 or even 200 g. The most-used three helmet testing standards, CPSC, ASTM F1447 and Snell B-95, are compared in table 1. It is obvious that Snell uses the most severe criteria for helmet tests.

**Table 1**

| Helmet test criteria for CSPC, ASTM F1447 and Snell B-95 | | | |
|---|---|---|---|
| | CPSC | ASTM F1447 | Snell B-95 |
| Drop height on flat anvil | 2.0 m | 2.0 m | 2.2 m |
| Drop height on hemispherical anvil | 1.2 m | 1.2 m | 1.5 m |
| Head form weight | 5 kg | 5 kg | 5 kg |
| Failure threshold | 300 g | 300 g | 300g |

The liner protects the wearer's head by absorbing the remaining force of the impact that was already partially absorbed and dispersed by the outer shell. It is therefore an object of the present invention

Surprisingly, it has now been found that improved impact absorption without adversely affecting the weight of the liner can be achieved if the liner comprises a composite material according to the present invention. Specifically, the composite material according to the present invention is able not only to dissipate and spread impact energy over the entire surface of e.g. a helmet, but also to absorb high levels of impact energy and to convert impact energy into uni-directional motion.

### Summary of the Invention

According to a first aspect of the present invention, a composite material is provided comprising or consisting of:
- an optional layer (a) comprising or consisting of a material comprising or consisting of a foamed or un-foamed, thermoplastic or thermosetting, polymer having a hardness in the range of Shore A 75 to Durometer D 85,
- a layer (b) comprising or consisting of a material comprising or consisting of an elastic or visco-elastic foam having a density in the range of 25 kg/m³ to 800 kg/m³,
- a layer (c) comprising or consisting of a material comprising or consisting of an elastic or visco-elastic foam having a density in the range of 25 kg/m³ to 720 kg/m³,
- a layer (d) comprising or consisting of a material comprising or consisting of a silicone rubber or a silicone gel having a hardness below Shore A 8, respectively.

According to another aspect of the present invention a method for producing the composite material as described above is provided comprising one or more of the following steps: injection molding, reaction injection molding, casting, bonding and overmolding.

In a further aspect, the present invention relates to a composite material, preferably a composite material as described above, produced by or producible by a method as described above.

In yet a further aspect, the present invention relates to an article comprising a composite material as described above, wherein the article is preferably selected from the group consisting of sport equipment, sport protectors, helmets and protective systems for consumer electronics.

The invention also relates to the use of a composite material as described above for absorbing impact energy.

### Detailed description of the invention

According to a first aspect of the present invention, a composite material is provided comprising or consisting of:
- an optional layer (a) comprising or consisting of a material comprising or consisting of a foamed or un-foamed, thermoplastic or thermosetting, polymer having a hardness in the range of Shore A 75 to Durometer D 85,
- a layer (b) comprising or consisting of a material comprising or consisting of an elastic or visco-elastic foam having a density in the range of 25 kg/m³ to 800 kg/m³,
- a layer (c) comprising or consisting of a material comprising or consisting of an elastic or visco-elastic foam having a density in the range of 25 kg/m³ to 720 kg/m³,
- a layer (d) comprising or consisting of a material comprising or consisting of a silicone rubber or a silicone gel having a hardness below Shore A 8, respectively.

The optional layer (a) is able to dissipate at least part of an impact energy E, when such impact energy is applied to the composite material. Suitable materials for optional layer (a) comprise *inter alia* PU-foams, TPU-foams and TPE-foams.

Layer (b) is suitable to dissipate part of an impact energy E and to absorb part of the impact energy E, when such impact energy is applied to the composite material. Suitable materials for layer (b) comprise *inter alia* visc-oelastic PU-foams, visco-elastic TPU-foams and visco-elastic TPE-foams.

Layer (c) is suitable to absorb part of the impact energy E, when such impact energy is applied to the composite material. Suitable materials for layer (c) comprise *inter alia* visco-elastic PU-foams.

Layer (d) is suitable to convert part of the impact energy E into uni-directional motion, when such impact energy is applied to the composite material. Suitable materials for layer (d) comprise *inter alia* low Shore hardness silicones and low Shore hardness silicone foams.

According to the present invention it is preferred that in the composite material described above, the elastic or visco-elastic foam in layer (b) has a density in the range of 400 kg/m³ to 700 kg/m³.

According to the present invention it is also preferred that in the composite material described above, the elastic or visco-elastic foam in layer (c) has a density in the range of 200 kg/m³ to 470 kg/m³.

According to the present invention it is further preferred that in the composite material described above, the silicone rubber or silicone gel in layer (d) has a hardness below Shore A 4.

According to the present invention it is preferred that the sequence of the layers is (a) - (b) - (c) - (d) or (b) - (c) - (d), respectively.

If the composite material according to the present invention is used for helmets, then the sequence of layers preferably is (b) - (c) - (d), i.e. optional layer (a) is not present.

If, however, the composite material according to the present invention is used for protectors, then the sequence of layers preferably is (a) - (b) - (c) - (d), i.e. optional layer (a) is present.

According to the present invention it may be preferred that the composite material further comprises a so-called "comfort-layer" and/or a "functional layer" comprising or consisting of a material comprising or consisting of textiles. Such comfort-layer and/or a functional layer may also enfold the composite material of the present invention.

According to the present invention it is further preferred that in the composite material described above optional layer (a) has a medium thickness in the range of 0.5 mm to 20 mm, preferably in the range of 2 mm to 5 mm.

According to the present invention it is also preferred that in the composite material described above layer (b) has a medium thickness in the range of 1 mm to 20 mm, preferably in the range of 2 mm to 10 mm.

According to the present invention it is also preferred that in the composite material described above layer (c) has a medium thickness in the range of 1 mm to 20 mm, preferably in the range of 2 mm to 10 mm.

According to the present invention it is also preferred that in the composite material described above layer (d) has a medium thickness in the range of 1 mm to 20 mm, preferably in the range of 4 mm to 12 mm.

According to another aspect of the present invention a method for producing the composite material as described above is provided comprising one or more of the following steps: injection molding, reaction injection molding, casting, bonding and overmolding.

In a further aspect, the present invention relates to a composite material, preferably a composite material as described above, produced by or producible by a method as described above.

In yet a further aspect, the present invention relates to an article comprising a composite material as described above, wherein the article is preferably selected from the group consisting of sport equipment, sport protectors, helmets and protective systems for consumer electronics.

The invention also relates to the use of a composite material as described above for absorbing impact energy.

## Claims

1. Composite material comprising or consisting of:
- an optional layer (a) comprising or consisting of a material comprising or consisting of a foamed or un-foamed, thermoplastic or thermosetting, polymer having a hardness in the range of Shore A 75 to Durometer D 85,
- a layer (b) comprising or consisting of a material comprising or consisting of an elastic or visco-elastic foam having a density in the range of 25 kg/m³ to 800 kg/m³,
- a layer (c) comprising or consisting of a material comprising or consisting of an elastic or visco-elastic foam having a density in the range of 25 kg/m³ to 720 kg/m³,
- a layer (d) comprising or consisting of a material comprising or consisting of a silicone rubber or a silicone gel having a hardness below Shore A 8, respectively, preferably having a hardness below Shore A 4, respectively.

2. Composite material according to claim 1, **characterized in that** in layer (b) the elastic or visco-elastic foam has a density in the range of 400 kg/m³ to 700 kg/m³.

3. Composite material according to claim 1 or 2, **characterized in that** in layer (c) the elastic or visco-elastic foam has a density in the range of 200 kg/m³ to 470 kg/m³.

4. Composite material according to any of claims 1 to 3, **characterized in that** in layer (d) the silicone rubber or silicone gel has a hardness below Shore A 4.

5. Composite material according to any of claims 1 to 4, **characterized in that** the sequence of the layers is (a) - (b) - (c) - (d) or (b) - (c) - (d), respectively.

6. Composite material according to any of claims 1 to 5, **characterized in that**
- optional layer (a) has a medium thickness in the range of 0.5 mm to 20 mm, preferably in the range of 2 mm to 5 mm,
and/or
- layer (b) has a medium thickness in the range of 1 mm to 20 mm, preferably in the range of 2 mm to 10 mm,
and/or
- layer (c) has a medium thickness in the range of 1 mm to 20 mm, preferably in the range of 2 mm to 10 mm,
and/or
- layer (d) has a medium thickness in the range of 1 mm to 20 mm, preferably in the range of 4 mm to 12 mm.

7. Method for producing the composite material according to any of claims 1 to 6 comprising one or more of the following steps: injection molding, reaction injection molding, casting, bonding and overmolding.

8. Composite material, preferably composite material according to any of claims 1 to 6, produced by or producible by a method according to claim 7.

9. Article comprising a composite material according to any of claims 1 to 6 or 8, wherein the article is preferably selected from the group consisting of sport equipment, sport protectors, helmets and protective systems for consumer electronics.

10. Use of a composite material according to any of claims 1 to 6 or 8 for absorbing impact energy.
